# EUROPEAN PATENT APPLICATION

(11) **EP 0 756 367 A2**
(43) Date of publication of application: **29.01.1997**
(21) Application number: 96500102.7
(22) Date of filing: 19.07.1996
(51) Int. Cl.: H02J 7/00

(54) **Safety device for starting up immobilized vehicles**

(30) Priority: 20.07.1995 ES 9501460
(71) Applicant: Gomez Gallardo, Diego, 28807 Alcala de Henares (Madrid) (ES)
(72) Inventor: Gomez Gallardo, Diego, 28807 Alcala de Henares (Madrid) (ES)
(74) Representative: Gil-Vega, Victor

(57) **Abstract**

The safety device for starting up immobilized vehicles, which is the subject of the invention, whose purpose is to prevent any damage, serving as a linking element between a charged auxiliary battery (B1) which generally forms part of the actual device and a discharged battery (B2) linked to the immobilized vehicle, is formed by the functional association of four circuit sections, each one of them with switching and signalling elements, three of which are capable of detecting possible anomalies arising from connection and a fourth of which has the switching and timing elements which are necessary to close a power relay (RL7) which is responsible for establishing the connection between the batteries if the connection has been made correctly.

## Description

### SUBJECT OF THE INVENTION

The present invention relates to a safety device for starting up immobilized vehicles, the purpose of which is to prevent any damage both in terms of the engine in the vehicle to be started up and in the auxiliary element used, preventing the establishment of the connection between them if said connection might give rise to a situation of risk or incorrect functioning.

### BACKGROUND OF THE INVENTION

The only way to start up an immobilized vehicle (car, lorry and plant, *inter alia)* is to connect a battery in parallel with the battery which is already on the vehicle.

The operation of making a connection between the two batteries has to be carried out correctly, according to the following rules:
a) the positive terminal of the auxiliary battery must be connected to the positive terminal of the discharged battery, the same operation being carried out with respect to the negative terminal;
b) a 12-volt auxiliary battery must never be connected to a 24-volt battery and vice versa;
c) the connection cables must not be shortcircuited;
d) the vehicle to be started up must have a damage-free electrical system.

If these rules are not followed, one of the batteries could explode, causing grave physical injury to those persons carrying out the task in addition to causing further damage to the electrical system of the vehicle to be started up, since it must not be forgotten that electronics plays an important part in modern vehicles.

In Patent of Invention No. 454,188 for "Improvements made to safety devices for detecting correct polarity or the existence of damage in the auxiliary starting-up of electrical machines", a description is given of a circuit which to a degree allows checking of the connection of an auxiliary element, by means of elements capable of globally detecting the suitability of the connection between the auxiliary element and the vehicle to be started up, but does not make it possible to know precisely the specific cause or causes which may give rise to non-connection of the elements involved in the process.

### DESCRIPTION OF THE INVENTION

The safety device for starting up immobilized vehicles proposed by the invention guarantees, firstly, the impossibility of establishing the connection between the auxiliary start-up element and the vehicle to be started up if there is any compatibility problem and, secondly, by using luminous or audible means, advises what type of problem is involved. To this end, it is formed by means of the functional association of four circuit sections, each one of them with its relevant indicator, the sections being made from relays with different characteristics depending on the function to be carried out and which are interconnected in such a manner as to allow the complete circuit to function unequivocally by means of the closure of a power relay via which the connection of the elements involved in the process may or may not be established.

Specifically, one of the sections is composed of three 12-volt relays (micro-relays), which are in series in order to protect against the 12-volt/24-volt change in polarity and voltage; another is composed of one 24-volt relay (micro-relay) to protect against a change in polarity; a third is composed of a 12-volt relay (micro-relay) to protect against short-circuits; and, a fourth is composed of a 5-volt relay (micro-relay) which detects the correct polarity and voltage and issues an order to a timer forming part thereof to start up the vehicle provided all the requirements of a correct connection have been fulfilled. The various elements and the device are connected by means of clips provided for this purpose.

The circuit is actuated totally automatically, no handling being necessary for it to carry out its task. The operations which are being carried out are at all times signalled on a control panel which carries the luminous indicators (checking lights). It is possible to use an alphanumeric screen and audible signalling amongst other checking operations.

### DESCRIPTION OF THE DRAWINGS

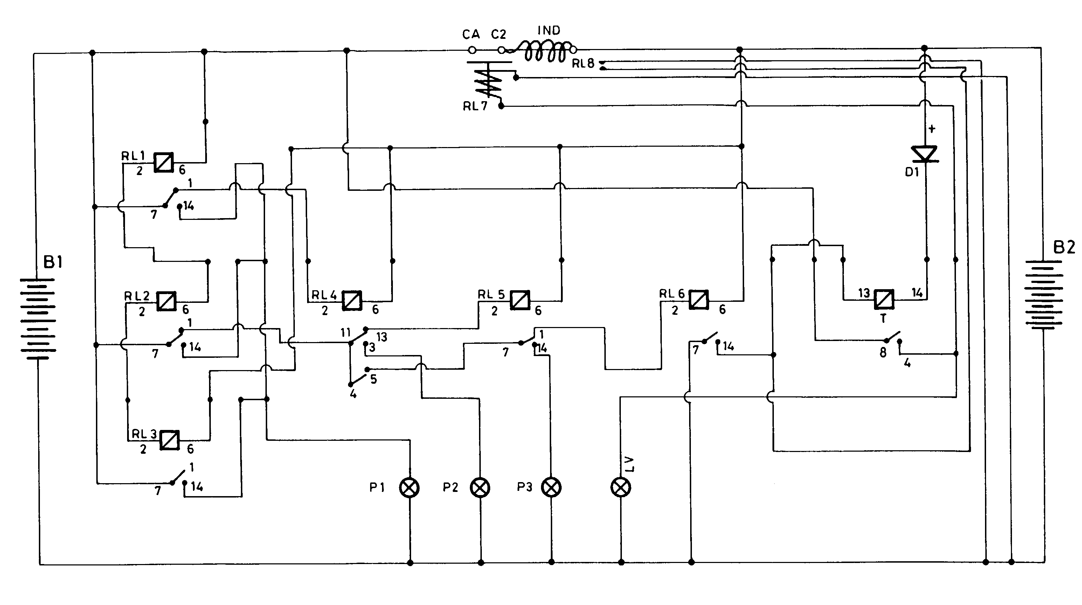

In order to supplement the description which is being given, the present specification is accompanied by a sheet of drawings which, in its single Figure, shows the circuit diagram of the safety device, in an illustrative and non-limiting manner, in which all the components and members by means of which the connection is established, both within the actual circuit and between the elements involved in the operation, are clearly shown.

### PREFERRED EMBODIMENT OF THE INVENTION

With reference to the Figure, it is possible to see that the safety device for starting up immobilized vehicles, which is the subject of the invention, is intended to serve as a linking element between a charged auxiliary battery (B1) which generally forms part of the actual device and a discharged battery (B2) linked to the immobilized vehicle. It consists of the functional association of four circuit sections, each one of them having switching and signalling elements, the first of which is formed by three relays (RL1), (RL2) and (RL3), in which the reference numbers (1) to (14) correspond in each case to the various terminals which each one of the relays has in order to establish the connections in the circuit. The device is connected to the discharged battery (B2) by means of clips available for this purpose.

In general, the connections (2) and (6) belong to the coils of each one of the relays. In the case of those forming the said first circuit section, (7) serves for switching (1) and (14), (1) of (RL1) serves for protecting the relay (RL4) and (1) of (RL2) serves for protecting the relays (RL5) and (RL6). The connections (14) of these three relays are intended to illuminate the red light (P1). This circuit is not started up until incorrect use of the apparatus occurs, for example placing a 12-volt battery in a condition of polarity inversion with one of 24 volts, whereupon there would be 36 volts at the contacts (C1) and (C2) of the power relay (RL7). Moreover, each one of these relays has an impedance of 450 ohms and, mounted in series, give a range of 1350 ohms which is suitable for the functioning of the circuit.

The second circuit section includes a 24-volt relay (RL4) which is intended to protect the relays (RL5) and (RL6) against a change in polarity since, in this case, there would be 24 volts at the contacts of the relay (RL7) at the same time as the red light (P2) is illuminated, advising the operator of a malfunction.

The third of the sections in question is composed of a 12-volt relay (RL5) which is actuated only when the terminals of the battery (B2) linked to the immobilized vehicle are in short-circuit, since 12 volts would appear at the contacts (C1) and (C2) of the relay (RL7). It is intended to disconnect (RL6), in order to prevent the 12 volts passing to it, and to illuminate the red light (P3).

Lastly, the fourth section of the circuit is formed by the relay (RL6) and a timer (T) and it is responsible for actuating the whole assembly. If the act of connecting up the batteries has been carried out correctly, i.e. connecting the terminals of the battery (B2) to the corresponding terminals of the battery (B1), the device remains on standby, awaiting the operator's turn of the vehicle's ignition key.

On carrying out the act of starting-up, a voltage of four or five volts, sufficient to actuate the relay (RL6), would occur between the contacts (C1) and (C2) of the power relay (RL7), providing a negative power supply to the timer (T) which would start up upon receiving current through the diode (D1). When current passes through said diode, the relay (RL7) would be actuated, the timer (T) being automatically supplied with power through the REED relay (RL8) actuated by the passage of current through the self-inductor (IND), at the same time as a green light (PV) is actuated, indicating that the operation has been carried out correctly.

Provision has been made for the device to be housed in a totally portable unit with a front panel where the current status of the apparatus, the battery associated with the immobilized vehicle and also the charged battery may be visualized at all times.

If 24-volt equipment is manufactured, it would be necessary to change only the voltage characteristics of the components.

It is not considered necessary to expand this description for any expert in the field to be able to understand the scope of the invention and the advantages deriving therefrom.

## Claims

1. Safety device for starting up immobilized vehicles, the purpose of which is to prevent any damage and which serves as a linking element between a charged auxiliary battery (B1) which generally forms part of the actual device and a discharged battery (B2), linked to the immobilized vehicle, characterized in that it consists of the functional association of four circuit sections, each one of them with switching and signalling elements, three of which are capable of detecting possible anomalies arising from the connection and a fourth of which has the switching and timing elements which are necessary for closing a power relay (RL7) which is responsible for establishing the connection between the batteries if the connection has been carried out correctly.

2. Safety device for starting up immobilized vehicles according to Claim 1, characterized in that the first of the sections consists of three 12-volt relays (micro-relays) (RL1), (RL2) and (RL3), the first (RL1) of which acts as protection for (RL4) and the second (RL2) of which acts as protector for (RL5) and (RL6), the change in polarity and voltage of the elements to be connected being checked, a red light (P1) for signalling incorrect connection having been provided.

3. Safety device for starting up immobilized vehicles according to the preceding claims, characterized in that the second section incorporates a 24-volt relay (micro-relay) (RL4) which, in combination with the relay (RL2) of the first section, serves to protect the relays (RL5) and (RL6) against a change in polarity, any defect being demonstrated by a red light (P2) which is included in this section.

4. Safety device for starting up immobilized vehicles according to the preceding claims, characterized in that the third of the sections consists of a 12-volt relay (micro-relay) (RL5) which is actuated in the event of a short-circuit in the battery (B2), this being demonstrated by means of a red light (P3).

5. Safety device for starting up immobilized vehicles according to the preceding claims, characterized in that the fourth section of the circuit consists of a 5-volt relay (micro-relay) (RL6) and a timer (T), this section being responsible for actuating the whole assembly when the relay (RL6) provides a negative power supply to the timer (T), allowing the passage of current through a diode (D1) and then being automatically supplied with power through a REED relay (RL8) actuated by means of the self-inductor (IND) when the contacts (C1) and (C2) of the power relay (RL7) are closed, the actuation of this section being demonstrated by means of a green light (PV).

6. Safety device for starting up immobilized vehicles according to the preceding claim, characterized in that the whole assembly, including the auxiliary battery, is housed inside a unit with a front panel where the status of the battery associated with the immobilized vehicle and even the charged battery may be visualized at all times.

7. Safety device for starting up immobilized vehicles according to the preceding claim, characterized in that the components to be used if the batteries are 24-volt batteries are the same, with the sole exception that they must be adapted to take account of this new voltage.
